# EUROPÄISCHE PATENTSCHRIFT

(11) **EP 3 406 918 B1**
(45) Veröffentlichungstag und Bekanntmachung des Hinweises auf die Patenterteilung: **18.12.2019**
(21) Anmeldenummer: 18172953.4
(22) Anmeldetag: 17.05.2018
(51) Int. Cl.: F16B 12/30, F16B 12/32, E06B 3/972

(54) **VERFAHREN ZUM LÖSBAREN VERBINDEN EINES ERSTEN UND ZWEITEN REGALBAUTEILS FÜR EIN MÖBELREGAL, ANORDNUNG FÜR EIN MÖBELREGAL UND MÖBELREGAL**
METHOD FOR REVERSIBLY CONNECTING A FIRST AND SECOND SHELF COMPONENT FOR A SHELVING UNIT, ASSEMBLY FOR A SHELVING UNIT AND SHELVING UNIT
PROCÉDÉ PERMETTANT DE RACCORDER DE MANIÈRE DÉTACHABLE UN PREMIER ET UN SECOND COMPOSANTD'ÉTAGÈRE POUR UN MEUBLE DE RANGEMENT ET MEUBLE DE RANGEMENT

(30) Priorität: 22.05.2017 DE 102017111094
(43) Veröffentlichungstag der Anmeldung: 28.11.2018
(73) Patentinhaber: Artis GmbH, 10965 Berlin (DE)
(72) Erfinder: Deiß, Wolf, 10965 Berlin (DE)
(74) Vertreter: Bittner, Thomas L.

(56) Entgegenhaltungen:
- DE-A1- 4 444 272
- DE-U1- 20 319 373
- FR-A- 1 580 440
- FR-A1- 2 814 511
- SE-A1- 1 400 386

## Beschreibung

Die Erfindung betrifft ein Verfahren zum lösbaren Verbinden eines ersten und eines zweiten Regalbauteils für ein Möbelregal, eine Anordnung für ein Möbelregal, sowie ein Möbelregal.

### Hintergrund

Zum Ausbilden von Möbelregalen ist es bekannt, Regalbauteile lösbar miteinander zu verbinden. Beispielsweise werden Regalstreben miteinander verbunden, um so ein Regalgestell bereitzustellen, in welches Regalböden eingelegt werden können. Die Regalstreben können lösbar oder nicht lösbar miteinander verbunden sein. In ähnlicher Weise können Regalböden lösbar oder nicht lösbar an dem Regalgestell aufgenommen sein. Das lösbare Verbinden von Regalelementen kann den Vorteil der Wiederverwendbarkeit haben.

In dem Dokument DE 86 02 265 U1 ist ein Verbindungselement für Gestelle offenbart, bestehend aus zwei schwenkbar aneinander gelagerten und mit Hilfe einer Verstellschraube auseinanderspreizbaren Hakenteilen, die axial in einem Hohlprofil des Gestelles gesichert und mit aus dem Stirnende des Hohlprofiles herausragenden, entgegengesetzt gerichteten Hakenenden versehen sind, die in Längsschlitze eines weiteren Hohlprofiles eingreifen.

Das Dokument DE 94 11 925 U1 betrifft eine Einrichtung zum endseitigen Anschluss eines zweiten Rohres an ein erstes Rohr mit einem im zweiten Rohr angeordneten Klemmkörper, welcher mit mindestens einem Schlitz versehen und durch eine Klemmschraube aufweitbar ist, welche durch eine Bohrung im zweiten Rohr einführbar ist.

In dem Dokument DE 203 19 373 U1 ist ein Tragwerksystem aus lösbar miteinander verbindbaren Längs- und Querholmen rechteckigen Querschnitts beschrieben, mit einem Knotenelement und in einer Ebene orthogonal zueinander in das Knotenelement einschraubbaren, mit einem Abschnitt in die stirnseitigen Öffnungen der Querholme einsteck- und dort axial festlegbaren Adapterschrauben.

Das Dokument DE 1 909 835 U betrifft eine Klemmvorrichtung zur Verbindung oder Befestigung von profilierten Rohren.

In dem Dokument EP 0 399 371 A1 wird ein Verbindungsbeschlag für Stabelemente zum Aufbau von räumlichen oder ebenen Fach- oder Tragwerken bereitgestellt, insbesondere Messeständen, Vitrinen oder Tischen, mit mindestens zwei von einem polyederförmigen Grundkörper an dessen Außenflächen getragene Verbindungszapfen, die im Querschnitt angepasst in die hohlen Enden der zu verbindenden Stabelemente eingreifen, wobei jeder Verbindungszapfen mindestens ein Klemmsegment aufweist, das mittels eines durch eine Wandbohrung der Stabelemente hindurch spann- und lösbaren Spannglieds innerhalb des hohlen Stabelementendes gegen die Stabelementinnenwandung spannbar ist.

Aus den Dokumenten DE 44 44 272 A1, SE 1 400 386 A1, FR 2 814 511 A1, FR 1 580 440 A sind andere Verbindungsbeschläge bekannt.

### Zusammenfassung

Aufgabe der Erfindung ist es, ein Verfahren zum lösbaren Verbinden eines ersten und eines zweiten Regalbauteils für ein Möbelregal sowie eine Anordnung für ein Möbelregal und ein Möbelregal anzugeben, mit denen bei flexibel gestaltbaren und an unterschiedliche Nutzungssituationen individuell anpassbaren Möbelregalen eine sichere, funktionsgerechte und lösbare Verbindung zwischen den Regalbauteilen ermöglicht ist.

Zur Lösung ist ein Verfahren zum lösbaren Verbinden eines ersten und eines zweiten Regalbauteils für ein Möbelregal nach dem unabhängigen Anspruch 1 geschaffen. Nebengeordnete Ansprüche 11 und 12 betreffen eine Anordnung für ein Möbelregal mit einem ersten oder einem zweiten Regalbauteil sowie ein Möbelregal. Alternative Ausgestaltungen sind Gegenstand von abhängigen Unteransprüchen.

Nach einem Aspekt ist ein Verfahren zum lösbaren Verbinden eines ersten und eines zweiten Regalbauteils für ein Möbelregal geschaffen. Bei dem Verfahren werden ein erstes Regalbauteil, welches einen stirnseitigen Aufnahmeraum aufweist, und ein zweites Regalbauteil bereitgestellt. Ein Klemmbauteil wird in einem Aufnahmeraum angeordnet, der mit zugeordneten Aufnahmen an einem ersten und einem zweiten Einschubbauteil jeweils innenseitig gebildet ist, wobei das Klemmbauteil auf einem proximalen Gewindeabschnitt eines Befestigungsbolzens in Bolzenlängsrichtung und in den zugeordneten Aufnahmen in einer Verlagerungsrichtung parallel zur Bolzenlängsrichtung verlagerbar angeordnet wird. Das erste und das zweite Einschubbauteil werden mit dem hierzwischen aufgenommenen Klemmbauteil und dem Befestigungsbolzen in dem stirnseitigen Aufnahmeraum an dem ersten Regalbauteil eingebracht, derart, dass das Klemmbauteil zum Verlagern in der Verlagerungsrichtung in dem Aufnahmeraum durch Öffnungen in dem ersten Regalbauteil sowie dem ersten oder dem zweiten Einschubbauteil hindurch betätigbar ist. Das erste und das zweite Regalbauteil werden lösbar verbunden, wobei hierbei, mittels Betätigen des Klemmbauteils von außerhalb des ersten Regalbauteils durch die Öffnungen hindurch, ein in Bezug auf das Klemmbauteil distaler Gewindeabschnitt des Befestigungsbolzens in eine Gewindeaufnahme in dem zweiten Regaibauteit eingeschraubt wird und das erste und das zweite Regalbauteil aneinander gedrückt werden, indem zusätzlich das Klemmbauteil mittels Verlagern auf dem proximalen Gewindeabschnitt in dem Aufnahmeraum in Verlagerungsrichtung in Richtung auf das zweite Regalbauteil hin gegen ein Ende des Aufnahmeraums verlagert wird.

Nach einem weiteren Aspekt ist eine Anordnung für ein Möbelregal mit einem ersten und einem zweiten Regalbauteil geschaffen, die lösbar verbunden werden können. Hierbei weist das erste Regalbauteil einen stirnseitigen Aufnahmeraum auf. In dem stirnseitigen Aufnahmeraum sind ein erstens und ein zweites Einschubbauteil angeordnet, wobei: in einem Aufnahmeraum, der mit zugeordneten Aufnahmen an dem ersten und dem zweiten Einschubbauteil jeweils innenseitig gebildet ist, ein Klemmbauteil angeordnet ist; das Klemmbauteil auf einem proximalen Gewindeabschnitt eines Befestigungsbolzens in Bolzenlängsrichtung verlagerbar angeordnet wird; das Klemmbauteil in den zugeordneten Aufnahmen in einer Verlagerungsrichtung parallel zur Bolzenlängsrichtung verlagerbar angeordnet wird und das erste und das zweite Einschubbauteil mit dem hierzwischen aufgenommenen Klemmbauteil und dem Befestigungsbolzen in dem stirnseitigen Aufnahmeraum an dem ersten Regalbauteil aufgenommen sind, derart, dass das Klemmbauteil zum Verlagern in der Verlagerungsrichtung in dem Aufnahmeraum durch Öffnungen in dem ersten Regalbauteil sowie dem ersten oder dem zweiten Einschubbauteil hindurch betätigbar ist. Das erste und das zweite Regalbauteil können lösbar miteinander verbunden werden, wobei hierbei mittels betätigen des Klemmbauteils von außerhalb des ersten Regalbauteils durch die Öffnungen hindurch ein in Bezug auf das Klemmbauteil distaler Gewindeabschnitt des Befestigungsbolzens in eine Gewindeaufnahme in dem zweiten Regalbauteil einschraubbar ist und das erste und das zweite Regalbauteil aneinander gedrückt werden können, indem zusätzlich Gewindeabschnitts das Klemmbauteil mittels Verlagern auf dem proximalen Gewindeabschnitt in dem Aufnahmeraum in Verlagerungsrichtung in Richtung auf das zweite Regaibauteil hin gegen ein Ende des Aufnahmeraums verlagerbar ist.

Weiterhin ist ein Möbelregal geschaffen, bei dem das erste und das zweite Regalbauteil der vorgenannten Art entsprechend lösbar miteinander verbunden sind.

Das Klemmbauteil kann mithilfe eines Werkzeugs zum Verbinden der beiden Regalbauteile betätigbar sein, beispielsweise mit Hilfe eines Schraubendrehers.

Das erste und / oder das zweite Regalbauteil können als eine Regalstrebe bereitgestellt werden, mit denen ein Regalrahmen oder -gestell aufbaubar ist, in den / das dann andere Funktionselemente des Möbelregals eingelegt werden können, beispielsweise Regalböden oder Einschübe.

Die Regalbauteile können aus unterschiedlichen Materialien bestehen, beispielsweise Holz oder Metall. In den verschiedenen Ausführungsformen können die Regalbauteile unterschiedliche Querschnittsformen aufweisen, beispielsweise viereckig, insbesondere quadratisch, oder rund. Voll- oder Hohlprofile können verwendet werden.

Die Gewindeaufnahme kann an dem zweiten Regalbauteil im Bereich eines ebenen Oberflächenabschnitts des zweiten Regalbauteils angeordnet sein.

Die vorgeschlagene Technologie ermöglicht es in einer Ausführung, eine Anordnung von Regalbauteilen herzustellen, bei der zwischen bestehenden Regalbauteilen, die in ihrer Relativlage zueinander fixiert sind und bei denen sich Seitenflächen gegenüberstehen, ein sich hierzu quer erstreckendes Regalbauteil zu montieren, derart, dass von dem sich quer erstreckenden Regalbauteil zu den beiden Regalbauteilen jeweils eine Verbindung ausgebildet wird, wie dies vorangehend erläutert wurde. Hierbei können die beiden schon montierten Regalbauteile ihren bestehenden Abstand beibehalten, auch bei der Montage des quer stehenden Regalbauteils.

Das Betätigen des Klemmbauteils kann das Betätigen einer am Klemmbauteil angeordneten Getriebeanordnung mittels eines Werkzeugs umfassen, wobei mit der Getriebeanordnung eine drehende Antriebsbewegung eines mit dem Werkzeug zu betätigenden Antriebsbauteils am Klemmbauteil in eine Einschraubbewegung zum Einschrauben des Befestigungsbolzens in die Gewindeaufnahme in dem zweiten Regalbauteil umgesetzt wird. Beim Öffnen der lösbaren Verbindung zwischen dem ersten und dem zweiten Regalbauteil ist die Antriebsbewegung umzukehren, was mittels entsprechender Werkzeugbetätigung erreicht werden kann. Befestigungseinrichtungen, die eine solche Getriebeanordnung als solche vorsehen, sind beispielsweise aus dem Dokument EP 2 253 855 B1 bekannt und werden hier daher nicht weiter erläutert.

Das erste und / oder das zweite Regalbauteil können als ein Hohlprofilbauteil bereitgestellt werden. Beispielsweise können Metallhohlprofile mit einem eckigen oder einem runden Querschnitt zum Einsatz kommen.

Der distale Gewindeabschnitt des Befestigungsbolzens kann zum Einschrauben in die Gewindeaufnahme an dem zweiten Regalbauteil durch eine Öffnung einer stirnseitigen Abdeckung an dem ersten Regalbauteil hindurch verlagert werden, wobei die stirnseitige Abdeckung die zugeordneten Aufnahmen in dem Aufnahmeraum in dem ersten Regalbauteil sichert. Die stirnseitige Abdeckung kann eine Abdeckplatte mit einer Öffnung zum Hindurchschieben des distalen Gewindeabschnitts des Befestigungsbolzens sein. In einer Ausgangsstellung kann der distale Gewindeabschnitt des Befestigungsbolzens im Wesentlichen vollständig in dem stirnseitigen Aufnahmeraum des ersten Regalbauteils angeordnet sein, sodass beim Verbinden des ersten und des zweiten Regalbauteils eine stirnseitige Fläche des ersten Regalbauteils auf die zugeordnete, gegenüberliegende Fläche des zweiten Regalbauteils aufgelegt werden kann, um dann den distalen Gewindeabschnitt des Befestigungsbolzens aus dem stirnseitigen Aufnahmeraum heraus zu verlagern und hierbei in die Gewindeaufnahme an dem zweiten Regalbauteil einzuschrauben.

Das erste und das zweite Einschubbauteil können mittels einer Positionssicherung in ihrer Relativlage zueinander gesichert werden. Die Sicherung der Relativlage von dem ersten und dem zweiten Einschubbauteil zueinander stellt dann auch eine Sicherung der relativen Lage der zugeordneten Aufnahmen auf der jeweiligen Innenseite der Einschubbauteile sicher. Auf diese Weise sind das erste und das zweite Einschubbauteil vor dem Einbringen in den stirnseitigen Aufnahmeraum an dem ersten Regalbauteil relativ zueinander sicherbar. Bei dieser oder anderen Ausführungsformen sind das erste und das zweite Einschubbauteil so lösbar miteinander verbindbar, bevor das Einbringen in den stirnseitigen Aufnahmeraum erfolgt.

Beim Ausbilden der Positionssicherung kann mindestens ein Vorsprung an dem ersten Einschubbauteil mit einer Ausnehmung an dem zweiten Einschubbauteil zum Eingriff gebracht werden. In einer beispielhaften Ausführungsform können mehrere Vorsprünge vorgesehen sein, beispielsweise mindestens ein jeweiliger Vorsprung in Eckbereichen des ersten Einschubbauteils. Auch können Vorsprünge und Ausnehmungen wechselseitig an den Einschubbauteilen vorgesehen sein. Der mindestens eine Vorsprung ist auf einer Innenseite des ersten Einschubbauteils angeordnet, insbesondere außerhalb eines innenseitigen Bereiches, der von der Aufnahme an dem ersten Einschubbauteil erfasst ist.

Beim Ausbilden der Positionssicherung kann mindestens ein Stift in jeweils eine Stiftaufnahme an den Einschubbauteilen eingesteckt werden. Mehrere Stifte können vorgesehen sein, die in ihre Stiftaufnahmen auf der Innenseite des ersten und des zweiten Einschubbauteils eingreifen, wenn das erste und das zweite Einschubbauteil mit dem hierzwischen aufgenommenen Klemmbauteil miteinander montiert werden, um diese Anordnung dann im stirnseitigen Aufnahmeraum des ersten Regalbauteils einzubringen.

Beim Einbringen können das erste und das zweite Einschubbauteil in dem stirnseitigen Aufnahmeraum in dem ersten Regalbauteil formschlüssig angeordnet werden. Bei dieser oder anderen Ausführungsformen kann die Anordnung mit dem ersten und dem zweiten Einschubbauteil vollständig in den stirnseitigen Aufnahmeraum eingeschoben werden, insbesondere derart, dass auch der Befestigungsbolzen in einer Ausgangsstellung vor dem Einschrauben in die Gewindeaufnahme am zweiten Regalbauteil hierin aufgenommen ist. Zur formschlüssigen Ausbildung kann eine Außenkontur der Anordnung mit dem ersten und dem zweiten Einschubbauteil, die miteinander verbunden sind, hinsichtlich seiner Form an den stirnseitigen Aufnahmeraum angepasst sein.

Das erste und das zweite Regalbauteil können als zueinander querstehende Regalbauteile miteinander verbunden werden. Hierbei kann die Stirnfläche des ersten Regalbauteils auf einer Seitenlängsfläche des zweiten Regalbauteils aufliegen. Bei dieser oder anderen Ausführungsformen können die beiden Regalbauteile von gleicher oder unterschiedlicher Bauart sein, beispielsweise das gleiche oder das unterschiedliche Querschnittsformat aufweisen.

Das Klemmbauteil kann in dem Aufnahmeraum, der mit den zugeordneten Aufnahmen an dem ersten und dem zweiten Einschubbauteil gebildet ist, entlang einer Langlochführung verlagert werden. In der Langlochführung kann das Klemmbauteil zum Öffnen und zum Schließen der lösbaren Verbindung vor und zurück verlagert werden, indem die Betätigung des Klemmbauteils mit dem Werkzeug erfolgt.

Im Zusammenhang mit der Anordnung für ein Möbelregal mit einem ersten und einem zweiten Regalbauteil, die lösbar miteinander zu verbinden sind, gelten die im Zusammenhang mit Ausgestaltungsalternativen für das Verfahren zum lösbaren Verbinden des ersten und zweitens Regalbauteils vorangehend gemachten Erläuterungen *mutatis mutandis.*

### Beschreibung von Ausführungsbeispielen

Im Folgenden werden weitere Ausführungsbeispiele unter Bezugnahme auf Figuren einer Zeichnung erläutert. Hierbei zeigen:
- Fig. 1: eine schematische perspektivische Darstellung einer Anordnung mit einem ersten und einem zweiten Regalbauteil, die lösbar verbunden werden können;
- Fig. 2: schematische Darstellungen der Anordnung des ersten und des zweiten Regalbauteils vor dem Herstellen der lösbaren Verbindung;
- Fig. 3: schematische Darstellungen einer Verbindungseinrichtung mit einem Befestigungsbolzen und hierauf angeordneten Klemmbauteil;
- Fig. 4: schematische Darstellungen einer Abdeckplatte und
- Fig. 5: schematische Darstellungen eines Einschubbauteils.

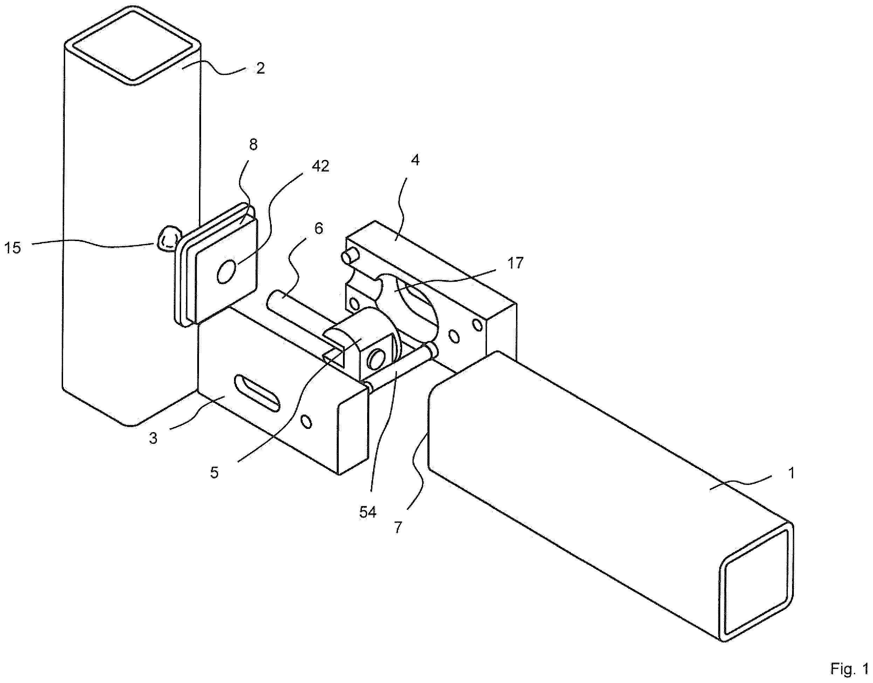

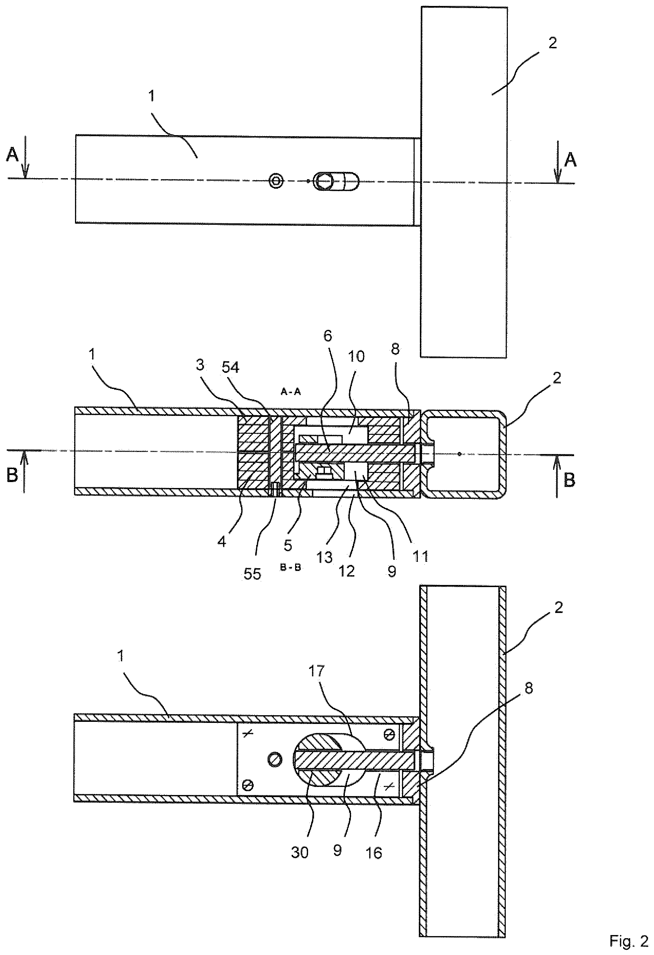

Fig. 1 zeigt eine perspektivische Darstellung einer Anordnung mit einem ersten und einem zweiten Regalbauteil 1, 2. Bei der gezeigten Ausführungsform sind das erste und das zweite Regalbauteil 1, 2 mittels Hohlprofilen bereitgestellt, die beispielhaft einen im Wesentlichen quadratischen Querschnitt aufweisen. Das erste und das zweite Regalbauteil 1, 2 sind bei dem gezeigten Ausführungsbeispiel eingerichtet, querstehend zueinander verbunden zu werden (vgl. Fig. 2).

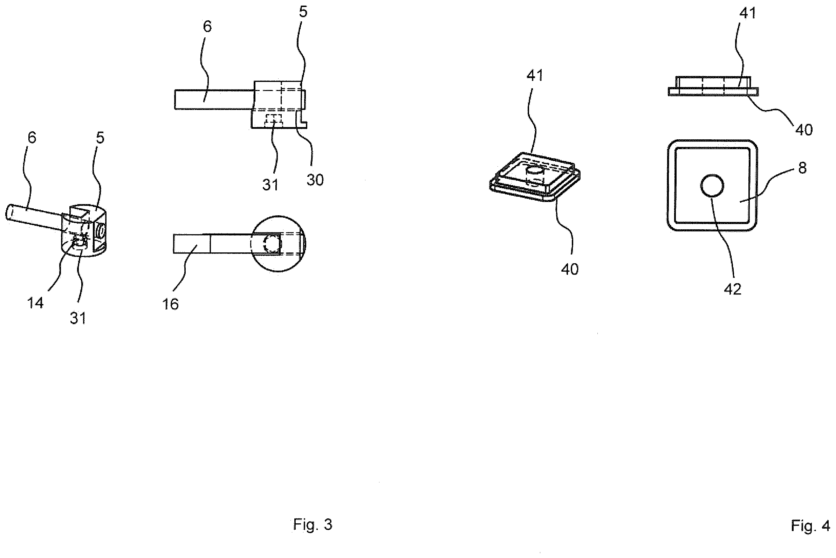

Fig. 2 zeigt die Anordnung aus Fig. 1 mit dem ersten und dem zweiten Regalbauteil 1, 2 derart, dass ein erstes und ein zweites Einschubbauteil 3, 4 mit einem hierzwischen aufgenommenen Klemmbauteil 5 sowie einem Befestigungsbolzen 6 in einem stirnseitigen Hohl- oder Aufnahmeraum 7 des ersten Regalbauteils 1 aufgenommen sind. Zur stirnseitigen Abdeckung ist eine stirnseitige Abdeckplatte 8 (vgl. auch Fig. 4) vorgesehen.

Das Klemmbauteil 5 ist in einem Aufnahmeraum 9 zwischen dem ersten und dem zweiten Einschubbauteil 3, 4 in zugeordneten Aufnahmen 10, 11 angeordnet, die jeweils innenseitig, an den ersten und dem zweiten Einschubbauteil Teil 3, 4 gebildet sind, wobei der Aufnahmeraum 9 in der dargestellten Ausführungsform als Langlochführung ausgebildet ist. Auch der Befestigungsbolzen 6 ist zwischen dem ersten und dem zweiten Einschubbauteil 3, 4 angeordnet. Einander gegenüberliegende Innenseiten des ersten und des zweiten Einschubbauteils 3, 4 können zumindest teilweise aufeinander liegen oder beabstandet sein, wenn die Anordnung mit den Einschubbauteilen in dem stirnseitigen Hohlraum 7 angeordnet ist.

Die Fig. 3 bis 5 zeigen Darstellungen des Befestigungsbolzens 6 mit hierauf angeordnetem Klemmbauteil 5, der Abdeckplatte 8 sowie des ersten Einschubbauteils 3.

Zum Ausbilden der lösbaren Verbindung zwischen dem ersten und dem zweiten Regalbauteil 1, 2 wird das Klemmbauteil 5 durch eine Öffnung 12 in dem ersten Regalbauteil 1 sowie eine Öffnung 13 in dem zweiten Einschubbauteil 4 hindurch mittels eines Werkzeugs (nicht dargestellt) betätigt, insbesondere mithilfe eines Schraubendrehers. Mit dem Werkzeug wird eine Getriebeanordnung 14 betätigt, die in dem Klemmbauteil 5 gebildet ist, um so eine Einschraubbewegung des Befestigungsbolzens 6 in Richtung einer Gewindeaufnahme 15 an dem zweiten Regalbauteil 2 zu bewirken. Auf diese Weise wird ein distaler Gewindeabschnitt 16 des Befestigungsbolzens 6 in der Gewindeaufnahme 15 eingeschraubt. Gleichzeitig wird das Klemmbauteil 5 mithilfe des Betätigens der Getriebeanordnung 14 in Richtung eines distalen Endes 17 der zugeordneten Aufnahmen 10, 11 bewegt, um so schließlich das erste Regalbauteil 1 gegen das zweite Regalbauteil 2 zu drücken. Mittels umgekehrten Betätigens ist die Verbindung wieder lösbar.

Gemäß Fig. 3 ist das Klemmbauteil 5 auf einem proximalen Gewindeabschnitt 30 des Befestigungsbolzens 6 angeordnet. Zum Betätigen der Getriebeanordnung 14 ist eine Werkzeugaufnahme 31 vorgesehen.

Nach Fig. 4 weist die Abdeckplatte 8 einen frontseitigen Abschnitt 40 sowie einen innenseitigen Abschnitt 41 auf, welcher beim Anordnen der Abdeckplatte 8 an dem zweiten Regalbauteil 2 im stirnseitigen Aufnahmeraum 7 aufgenommen wird. Durch eine Öffnung 42 hindurch erfolgt die Verlagerung des distalen Gewindeabschnitts 16 des Befestigungsbolzens 6 beim Schließen und Öffnen der lösbaren Verbindung.

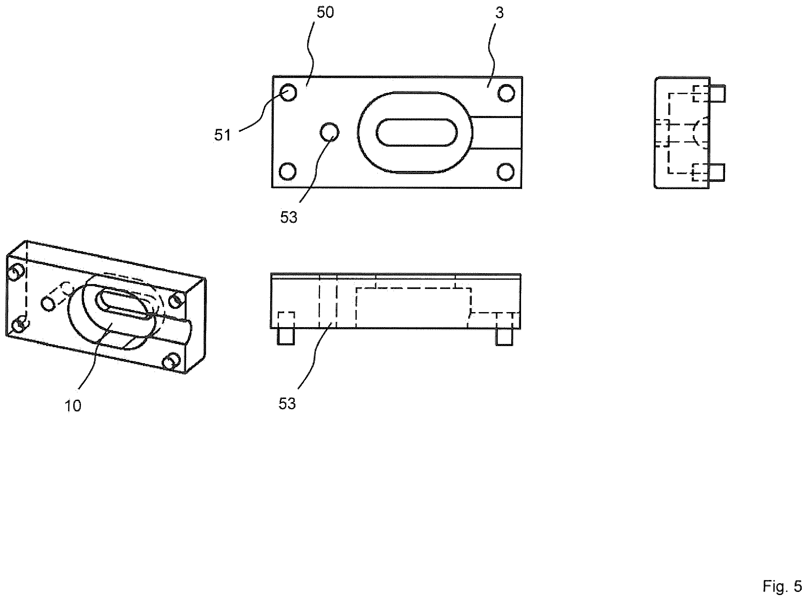

Gemäß Fig. 5 sind an dem ersten Einschubbauteil 3 in Eckbereichen 50 Ausnehmungen 51 vorgesehen, in die beim Montieren des ersten und zweiten Einschubbauteils 3, 4 zugeordnete Vorsprünge 52 eingreifen, wodurch eine Positionssicherung für die Relativlage des ersten und des zweiten Einschubbauteils 3, 4 zueinander ausgebildet ist.

Eine weitere Ausnehmung 53 kann zum Einstecken eines Stifts 54 (vgl. Fig. 1) genutzt werden, um die Montage des ersten und des zweiten Einschubbauteils 3, 4 zusätzlich zu sichern. Hierbei wird der mit Schraubgewinde versehene Stift 54 durch eine weitere Öffnung 55 in dem ersten Regalbauteil 1 (vgl. Fig. 2) eingeführt und mittels Einschrauben gesichert, nachdem die Einschubbauteile 3, 4 in dem stirnseitigen Hohl- oder Aufnahmeraum 7 des ersten Regalbauteils 1 eingebracht sind. Der eingeführte Stift 54 durchgreift die weitere Öffnung 54 sowie die Einschubbauteile 3, 4 und drückt gegen die Innenseite des ersten Regalbauteils 1, wodurch die Einschubbauteile 3, 4 sowie die hieran oder hierin angeordneten Komponenten gesichert sind. In der weiteren Öffnung 55 und / oder in einem oder beiden Bereichen, in welchen der Stift 54 die Einschraubbauteile 3, 4 durchgreift, kann ein Schraubgewinde angeordnet sein. Es kann vorgesehen sein, dass der Stift 54 an seinem Ende, welches im eingeführten Zustand innen gegen das erste Regalbauteil 1 drückt, konisch mit einer Spitze ausgebildet ist, die sich wahlweise lokal ins Material eindrückt.

## Patentansprüche

1. Verfahren zum lösbaren Verbinden eines ersten und eines zweiten Regalbauteils (1, 2) für ein Möbelregal, wobei das Verfahren die folgenden Schritte aufweist:
- Bereitstellen eines ersten Regelbauteils (1), welches einen stirnseitigen Aufnahmeraum (7) aufweist;
- Bereitstellen eines zweiten Regalbauteils (2);
- Anordnen eines Klemmbauteils (5) in einem Aufnahmeraum (9), der mit zugeordneten Aufnahmen (10, 11) an einem ersten und einem zweiten Einschubbauteil (3, 4) jeweils innenseitig gebildet ist, wobei
- das Klemmbauteil (5) auf einem proximalen Gewindeabschnitt (30) eines Befestigungsbolzens (6) in Bolzenlängsrichtung verlagerbar angeordnet wird und
- das Klemmbauteil (5) in den zugeordneten Aufnahmen (10, 11) in einer Verlagerungsrichtung parallel zur Bolzenlängsrichtung verlagerbar angeordnet wird;
- Einbringen des ersten und des zweiten Einschubbauteils (3, 4) mit dem hierzwischen aufgenommenen Klemmbauteil (5) und dem Befestigungsbolzen (6) in dem stirnseitigen Aufnahmeraum (7) an dem ersten Regalbauteil (1), derart, dass das Klemmbauteil (5) zum Verlagern in der Verlagerungsrichtung in dem Aufnahmeraum (9) durch Öffnungen (12, 13) in dem ersten Regalbauteil (1) und dem ersten oder dem zweiten Einschubbauteil (3; 4) hindurch betätigbar ist; und
- lösbares Verbinden des ersten und des zweiten Regalbauteils (1, 2), wobei hierbei mittels Betätigen des Klemmbauteils (5) von außerhalb des ersten Regalbauteils (1) durch die Öffnungen (12, 13) hindurch
- ein in Bezug auf das Klemmbauteil (5) distaler Gewindeabschnitt (16) des Befestigungsbolzens (6) in eine Gewindeaufnahme (15) in dem zweiten Regalbauteil (2) eingeschraubt wird und
- das erste und das zweite Regalbauteil (1, 2) aneinander gedrückt werden, indem zusätzlich das Klemmbauteil (5) mittels Verlagern auf dem proximalen Gewindeabschnitt (30) in dem Aufnahmeraum (9) in Verlagerungsrichtung in Richtung auf das zweite Regalbauteil (2) hin gegen ein Ende (17) des Aufnahmeraums (9) verlagert wird.

2. Verfahren nach Anspruch 1, **dadurch gekennzeichnet, dass** das Betätigen des Klemmbauteils (5) das Betätigen einer am Klemmbauteil (5) angeordneten Getriebeanordnung (14) mittels eines Werkzeugs umfasst, wobei mit der Getriebeanordnung (14) eine drehende Antriebsbewegung eines mit dem Werkzeug zu betätigenden Antriebsbauteils am Klemmbauteil (5) in eine Einschraubbewegung zum Einschrauben des Befestigungsbolzens (6) in die Gewindeaufnahme (15) in dem zweiten Regalbauteil (2) umgesetzt wird.

3. Verfahren nach Anspruch 1 oder 2, **dadurch gekennzeichnet, dass** das erste und / oder das zweite Regalbauteil (1, 2) als ein Hohlprofilbauteil bereitgestellt werden.

4. Verfahren nach mindestens einem der vorangehenden Ansprüche, **dadurch gekennzeichnet, dass** der distale Gewindeabschnitt (16) des Befestigungsbolzens (6) zum Einschrauben in die Gewindeaufnahme (15) an dem zweiten Regalbauteil (2) durch eine Öffnung (42) einer stirnseitigen Abdeckung (8) an dem ersten Regalbauteil (1) hindurch verlagert wird, wobei die stirnseitige Abdeckung (8) die zugeordneten Aufnahmen (10, 11) in dem Aufnahmeraum (9) in dem ersten Regalbauteil (1) sichert.

5. Verfahren nach mindestens einem der vorangehenden Ansprüche, **dadurch gekennzeichnet, dass** das erste und das zweite Einschubbauteil (3, 4) mittels einer Positionssicherung in ihrer Relativlage zueinander gesichert werden.

6. Verfahren nach Anspruch 5, **dadurch gekennzeichnet, dass** beim Ausbilden der Positionssicherung mindestens ein Vorsprung an dem ersten Einschubbauteil (3) mit einer Ausnehmung an dem zweiten Einschubbauteil (4) zum Eingriff gebracht wird.

7. Verfahren nach Anspruch 5 oder 6, **dadurch gekennzeichnet, dass** beim Ausbilden der Positionssicherung mindestens ein Stift (54) in eine jeweilige Stiftaufnahme an dem ersten und dem zweiten Einschubbauteil (3, 4) eingesteckt wird.

8. Verfahren nach mindestens einem der vorangehenden Ansprüche, dadurch **gekenn-zeichnet**, dass beim Einbringen das erste und das zweite Einschubbauteils (3, 4) in dem stirnseitigen Aufnahmeraum (7) in dem ersten Regalbauteil (1) formschlüssig angeordnet werden.

9. Verfahren nach mindestens einem der vorangehenden Ansprüche, **dadurch gekennzeichnet, dass** das erste und das zweite Regalbauteil (1, 2) als zueinander querstehende Regalbauteile miteinander verbunden werden.

10. Verfahren nach mindestens einem der vorangehenden Ansprüche, **dadurch gekenn- zeichnet**, dass das Klemmbauteil (5) in dem Aufnahmeraum (9), der mit den zugeordneten Aufnahmen (10, 11) an dem ersten und dem zweiten Einschubbauteil (3, 4) gebildet ist, entlang einer Langlochführung verlagert wird.

11. Anordnung für ein Möbelregal mit einem ersten und einem zweiten Regalbauteil (1, 2), die lösbar verbindbar sind, wobei
- das erste Regelbauteil (1) einen stirnseitigen Aufnahmeraum (7) aufweist;
- in dem stirnseitigen Aufnahmeraum (7) ein erstes und ein zweites Einschubbauteil (3, 4) angeordnet sind, wobei
- in einem Aufnahmeraum (9), der mit zugeordneten Aufnahmen (10, 11) an dem ersten und dem zweiten Einschubbauteil (3, 4) jeweils innenseitig gebildet ist, ein Klemmbauteil (5) angeordnet ist;
- das Klemmbauteil (5) auf einem proximalen Gewindeabschnitt (30) eines Befestigungsbolzens (6) in Bolzenlängsrichtung verlagerbar angeordnet ist;
- das Klemmbauteil (5) in den zugeordneten Aufnahmen (10, 11) in einer Verlagerungsrichtung parallel zur Bolzenlängsrichtung verlagerbar angeordnet ist und
- das erste und das zweite Einschubbauteil (3, 4) mit dem hierzwischen aufgenommenen Klemmbauteil (5) und dem Befestigungsbolzen (6) in dem stirnseitigen Aufnahmeraum (7) an dem ersten Regalbauteil (1) aufgenommen sind, dass das Klemmbauteil (5) zum Verlagern in der Verlagerungsrichtung in dem Aufnahmeraum (9) durch Öffnungen (12, 13) in dem ersten Regalbauteil (1) und dem ersten oder dem zweiten Einschubbauteil (3; 4) hindurch betätigbar ist; und
- das erste und das zweite Regalbauteil (1, 2) lösbar verbunden werden können, wobei hierbei mittels Betätigen des Klemmbauteils (5) von außerhalb des ersten Regalbauteils (1) durch die Öffnungen (12, 13) hindurch
- ein in Bezug auf das Klemmbauteil (5) distaler Gewindeabschnitt (16) des Befestigungsbolzens (6) in eine Gewindeaufnahme (15) in dem zweiten Regalbauteil (2) einschraubbar ist und
- das erste und das zweite Regalbauteil (1, 2) aneinander gedrückt werden können, indem zusätzlich zum Einschrauben des distalen Gewindeabschnitts (16) das Klemmbauteil (5) mittels Verlagern auf dem proximalen Gewindeabschnitt (30) in dem Aufnahmeraum (9) in Verlagerungsrichtung in Richtung auf das zweite Regalbauteil (2) hin gegen ein Ende (17) des Aufnahmeraums (9) verlagerbar ist.

12. Möbelregal, mit einer Anordnung nach Anspruch 11, wobei das erste und das zweite Regalbauteil (1, 2) lösbar miteinander verbunden sind.

## Claims

1. A method for detachably connecting a first and a second shelving component (1, 2) for shelving furniture, wherein the method has the following steps:
- providing a first shelving component (1), which has an end-side accommodating space (7);
- providing a second shelving component (2);
- arranging a clamping component (5) in an accommodating space (9), which is in each case formed internally with associated mounts (10, 11) on a first and a second insertion component (3, 4), wherein
- the clamping component (5) is arranged on a proximal threaded section (30) of a fastening bolt (6) in a displaceable manner in the bolt longitudinal direction, and
- the clamping component (5) is arranged in the associated mounts (10, 11) in a displaceable manner in a displacement direction parallel to the bolt longitudinal direction;
- introducing the first and the second insertion component (3, 4) with the clamping component (5) accommodated therebetween and the fastening bolt (6) in the end-side accommodating space (7) on the first shelving component (1), in such a manner that the clamping component (5) can be actuated for displacement in the displacement direction in the accommodating space (9) through openings (12, 13) in the first shelving component (1) and the first or the second insertion component (3; 4); and
- detachably connecting the first and the second shelving component (1, 2), wherein thereby, by means of actuation of the clamping component (5) from outside the first shelving component (1), through the openings (12, 13),
- a threaded section (16) of the fastening bolt (6), which is distal in relation to the clamping component (5), is screwed into a threaded mount (15) in the second shelving component (2), and
- the first and the second shelving component (1, 2) are pressed against one another, in that the clamping component (5) is additionally displaced by means of displacement on the proximal threaded section (30) in the accommodating space (9) in the displacement direction in the direction towards the second shelving component (2) towards one end (17) of the accommodating space (9).

2. The method according to claim 1, **characterized in that** the actuation of the clamping component (5) comprises the actuation of a gearing arrangement (14) arranged on the clamping component (5) by means of a tool, wherein a rotational drive movement of a drive component on the clamping component (5), to be actuated using the tool, is converted, using the gearing arrangement (14), into a screw-in movement for screwing the fastening bolt (6) into the threaded mount (15) in the second shelving component (2).

3. The method according to claim 1 or 2, **characterized in that** the first and/or the second shelving component (1, 2) is provided as a hollow-profile component.

4. The method according to at least one of the preceding claims, **characterized in that** the distal threaded section (16) of the fastening bolt (6) is displaced through an opening (42) of an end-side cover (8) on the first shelving component (1) for screwing into the threaded mount (15) on the second shelving component (2), wherein the end-side cover (8) secures the associated mounts (10, 11) in the accommodating space (9) in the first shelving component (1).

5. The method according to at least one of the preceding claims, **characterized in that** the first and the second insertion component (3, 4) are secured in their relative position to one another by means of position securing.

6. The method according to claim 5, **characterized in that** when forming the position securing, at least one projection on the first insertion component (3) is brought into engagement with a recess on the second insertion component (4).

7. The method according to claim 5 or 6, **characterized in that** when forming the position securing, at least one pin (54) is plugged into a respective pin mount on the first and the second insertion component (3, 4).

8. The method according to at least one of the preceding claims, **characterized in that**, during introduction, the first and the second insertion component (3, 4) are arranged in a positive-fitting manner in the end-side accommodating space (7) in the first shelving component (1).

9. The method according to at least one of the preceding claims, **characterized in that** the first and the second shelving component (1, 2) are connected to one another as mutually transverse shelving components.

10. The method according to at least one of the preceding claims, **characterized in that** the clamping component (5) is displaced along a slotted guide in the accommodating space (9), which is formed with the associated mounts (10, 11) on the first and the second insertion component (3, 4).

11. An arrangement for shelving furniture having a first and a second shelving component (1, 2), which are detachably connectable manner, wherein
- the first shelving component (1) has an end-side accommodating space (7);
- a first and a second insertion component (3, 4) are arranged in the end-side accommodating space (7), wherein
- a clamping component (5) is arranged in an accommodating space (9), which is in each case formed internally with associated mounts (10, 11) on the first and the second insertion component (3, 4);
- the clamping component (5) is arranged on a proximal threaded section (30) of a fastening bolt (6) in a displaceable manner in the bolt longitudinal direction;
- the clamping component (5) is arranged in the associated mounts (10, 11) in a displaceable manner in a displacement direction parallel to the bolt longitudinal direction, and
- the first and the second insertion component (3, 4) with the clamping component (5) accommodated therebetween and the fastening bolt (6) are accommodated in the end-side accommodating space (7) on the first shelving component (1), in such a manner that the clamping component (5) can be actuated for displacement in the displacement direction in the accommodating space (9) through openings (12, 13) in the first shelving component (1) and the first or the second insertion component (3; 4); and
- the first and the second shelving component (1, 2) can be detachably connected, wherein thereby, by means of actuation of the clamping component (5) from outside the first shelving component (1), through the openings (12, 13),
- a threaded section (16) of the fastening bolt (6), which is distal in relation to the clamping component (5), can be screwed into a threaded mount (15) in the second shelving component (2), and
- the first and the second shelving component (1, 2) can be pressed against one another, in that, for screwing in the distal threaded section (16), the clamping component (5) can additionally be displaced by means of displacement on the proximal threaded section (30) in the accommodating space (9) in the displacement direction in the direction towards the second shelving component (2) towards one end (17) of the accommodating space (9).

12. A shelving furniture, having an arrangement according to claim 11, wherein the first and the second shelving component (1, 2) can be detachably connected to one another.

## Revendications

1. Procédé, destiné à l'assemblage amovible d'un premier et d'un deuxième éléments de rayonnage (1, 2) pour un rayonnage de meuble, le procédé comportant les étapes suivantes consistant à :
- mettre à disposition un premier élément de rayonnage (1), lequel comporte un espace de logement (7) frontal ;
- mettre à disposition un deuxième élément de rayonnage (2) ;
- placer un élément de serrage (5) dans un espace de logement (9), qui est formé, respectivement du côté interne avec des logements (10, 11) associés sur un premier et un deuxième éléments emboîtables (3, 4), lors duquel
- on place l'élément de serrage (5) de manière déplaçable dans la direction longitudinale du boulon sur un tronçon de filetage (30) proximal d'un boulon de fixation (6) et
- on place l'élément de serrage (5) dans les logements (10, 11) associés dans une direction de déplacement à la direction longitudinale du boulon ;
- introduire le premier et le deuxième éléments emboîtables (3, 4) avec l'élément de serrage (5) logé entre eux et le boulon de fixation (6) dans l'espace de logement (7) frontal sur le premier élément de rayonnage (1), de telle sorte que pour le déplacement dans la direction de déplacement dans l'espace de logement (9), l'élément de serrage (5) soit actionnable à travers des orifices (12, 13) dans le premier élément de rayonnage (1) et le premier ou le deuxième élément emboîtable (3 ; 4) ; et
- assembler de manière amovible le premier et le deuxième éléments de rayonnage (1, 2), à cet effet, par actionnement de l'élément de serrage (5) à partir de l'extérieur du premier élément de rayonnage (1) à travers les orifices (12, 13)
- un tronçon de filetage (16) du boulon de fixation (6), distal par rapport à l'élément de serrage (5) étant vissé dans un logement taraudé (15) dans le deuxième élément de rayonnage (2) et
- le premier et le deuxième éléments de rayonnage (1, 2) étant pressés l'un contre l'autre, en ce qu'additionnellement, on déplace l'élément de serrage (5) par déplacement sur le tronçon fileté (30) proximal dans l'espace de logement (9) dans la direction de déplacement, en direction du deuxième élément de rayonnage (2) contre une extrémité (17) de l'espace de logement (9).

2. Procédé selon la revendication 1, **caractérisé en ce que** l'actionnement de l'élément de serrage (5) comprend l'actionnement d'un dispositif de transmission (14) placé sur l'élément de serrage (5) au moyen d'un outil, à l'aide du dispositif de transmission (14), un déplacement d'entraînement en rotation d'un élément d'entraînement sur l'élément de serrage (5) qui doit être actionné à l'aide de l'outil étant converti en un déplacement de vissage, destiné à visser le boulon de fixation (6) dans le logement taraudé (15) dans le deuxième élément de rayonnage (2).

3. Procédé selon la revendication 1 ou 2, **caractérisé en ce que** le premier et / ou le deuxième élément de rayonnage (1, 2) est mis à disposition sous la forme d'un élément en profilé creux.

4. Procédé selon au moins l'une quelconque des revendications précédentes, **caractérisé en ce que** pour le vissage dans le logement taraudé (15), on déplace le tronçon de filetage (16) distal du boulon de fixation (6) sur le deuxième élément de rayonnage (2) à travers un orifice (42) d'un recouvrement (8) frontal sur le premier élément de rayonnage (1), le recouvrement (8) frontal bloquant les logements (10, 11) associés dans l'espace de logement (9) dans le premier élément de rayonnage (1).

5. Procédé selon au moins l'une quelconque des revendications précédentes, **caractérisé en ce qu'**on bloque le premier et le deuxième éléments emboîtables (3, 4) au moyen d'un blocage en position dans leur position relative l'un par rapport à l'autre.

6. Procédé selon la revendication 5, **caractérisé en ce que** lors de la création du blocage en position, on amène en engagement au moins une saillie sur le premier élément emboîtable (3) avec un évidement sur le deuxième élément emboîtable (4).

7. Procédé selon la revendication 5 ou 6, **caractérisé en ce que** lors de la création du blocage en position, on insère au moins une tige (54) dans un logement de tige respectif sur le premier et le deuxième éléments emboîtables (3, 4).

8. Procédé selon au moins l'une quelconque des revendications précédentes, **caractérisé en ce que** lors de l'insertion, on place par complémentarité de forme le premier et le deuxième éléments emboîtables (3, 4) dans l'espace de logement (7) frontal dans le premier élément de rayonnage (1).

9. Procédé selon au moins l'une quelconque des revendications précédentes, **caractérisé en ce qu'**on assemble l'un avec l'autre le premier et le deuxième éléments de rayonnage (1, 2) comme des éléments de rayonnage perpendiculaires l'un à l'autre.

10. Procédé selon au moins l'une quelconque des revendications précédentes, **caractérisé en ce qu'**on déplace l'élément de serrage (5) dans l'espace de logement (9) qui est formé avec les logements (10, 11) associés sur le premier et le deuxième éléments emboîtables (3, 4) le long d'un guidage en trou oblong.

11. Dispositif destiné à un rayonnage de meuble, pourvu d'un premier et d'un deuxième éléments de rayonnage (1, 2), qui sont susceptibles d'être assemblés de manière amovible,
- le premier élément de rayonnage (1) comportant un espace de logement (7) frontal ;
- dans l'espace de logement (7) frontal étant placés un premier et un deuxième éléments emboîtables (3, 4),
- dans un espace de logement (9), qui est formé respectivement sur le côté interne avec des logements (10, 11) associés sur le premier et le deuxième éléments emboîtables (3, 4) étant placé un élément de serrage (5) ;
- l'élément de serrage (5) étant placé en étant déplaçable dans la direction longitudinale du boulon sur un tronçon de filetage (30) proximal d'un boulon de fixation (6) ;
- l'élément de serrage (5) étant placé en étant déplaçable dans les logements (10, 11) associés, dans une direction de déplacement à la parallèle de la direction longitudinale du boulon et
- le premier et le deuxième éléments emboîtables (3, 4) avec l'élément de serrage (5) logé entre eux et le boulon de fixation (6) étant logés dans l'espace de logement (7) sur le premier élément de rayonnage (1), de sorte que pour le déplacement dans la direction de déplacement, l'élément de serrage (5) soit actionnable dans l'espace de logement (9) à travers des orifices (12, 13) dans le premier élément de rayonnage (1) et le premier ou le deuxième élément emboîtable (3 ; 4) ; et
- le premier et le deuxième éléments de rayonnage (1, 2) pouvant être assemblés de manière amovible, à cet effet, au moyen d'un actionnement de l'élément de serrage (5) à partir de l'extérieur du premier élément de rayonnage (1) à travers les orifices (12, 13)
- un tronçon de filetage (16) du boulon de fixation (6), distal par rapport à l'élément de serrage (5) étant susceptible d'être vissé dans un logement taraudé (15) dans le deuxième élément de rayonnage (2) et
- le premier et le deuxième éléments de rayonnage (1, 2) pouvant être pressés l'un contre l'autre, en ce qu'additionnellement au vissage du tronçon de filetage (16) distal, l'élément de serrage (5) puisse être déplacé dans la direction de déplacement, en direction du deuxième élément de rayonnage (2) contre une extrémité (17) de l'espace de logement (9) par déplacement sur le tronçon de filetage (30) proximal dans l'espace de logement (9).

12. Rayonnage de meuble, pourvu d'un dispositif selon la revendication 11, le premier et le deuxième éléments de rayonnage (1, 2) étant assemblés l'un à l'autre de manière amovible.
